# EUROPÄISCHE PATENTSCHRIFT

(11) **EP 1 307 314 B1**
(45) Veröffentlichungstag und Bekanntmachung des Hinweises auf die Patenterteilung: **14.04.2004**
(21) Anmeldenummer: 01954037.6
(22) Anmeldetag: 12.07.2001
(51) Int. Cl.: B23C 3/12, B27D 5/00

(54) **BEARBEITUNGSAGGREGAT FÜR EIN BEARBEITUNGSZENTRUM**
MACHINING UNIT FOR A MACHINING CENTRE
UNITE D'USINAGE DESTINEE A UN CENTRE D'USINAGE

(30) Priorität: 11.08.2000 DE 10039413
(43) Veröffentlichungstag der Anmeldung: 07.05.2003
(73) Patentinhaber: Homag Holzbearbeitungssysteme AG, 72296 Schopfloch (DE)
(72) Erfinder: STURM, Gotthilf, 72293 Glatten-Neneck (DE); KALMBACH, Kurt, 72275 Alpirsbach (DE)
(74) Vertreter: HOFFMANN - EITLE
(86) Internationale Anmeldenummer: PCT/EP2001/008072
(87) Internationale Veröffentlichungsnummer: WO 2002/014004

(56) Entgegenhaltungen:
- EP-A- 0 976 483
- DE-A- 3 133 970
- DE-A- 4 113 543
- DE-C- 3 732 810
- US-A- 2 874 616

## Beschreibung

### GEBIET DER ERFINDUNG

Die Erfindung betrifft ein Aggregat für ein Bearbeitungszentrum, nach dem Oberbegriff von Anspruch 1.

Solche Bearbeitungszentren (EP-A-976 483) werden zur Bearbeitung von Holzwerkstücken eingesetzt, wobei das Holzwerkstück während des Bearbeitungsvorgangs auf einem Spanntisch aufgespannt ruht und das Bearbeitungsaggregat mit dem daran angebrachten Werkzeug an die zu bearbeitende Position des Werkstücks verfahren wird. Das Bearbeitungsaggregat ist am Bearbeitungszentrum so angebracht, dass das Drehmoment von einer Hauptspindel auf eine Antriebsachse des Bearbeitungsaggregates übertragen wird. Dieses Drehmoment wird zum Werkzeug, gegebenenfalls durch Umlenkung, weitergeleitet.

### STAND DER TECHNIK

Für die genannten Bearbeitungszentren sind die verschiedenartigsten Bearbeitungsaggregate bekannt. Insbesondere sind solche Bearbeitungsaggregate bekannt, die numerisch gesteuert an das Werkstück gebracht werden und dort Kanten, Oberflächen und ähnliches bearbeiten. Beispielsweise können Kanten durch Fräsen bearbeitet werden, Bohrungen in ein plattenförmiges Werkstück eingebracht werden oder überstehende Kanten mittels Kappsägen abgeschnitten werden. Säge- und Kappaggregate, vertikal oder verschwenkbar angebracht, dienen auch der Ausführung von Trennschnitten oder Ausschnitten oder Ausklinkungen.

Andererseits sind sogenannte getastete Bearbeitungsaggregate bekannt. An diesen ist zusätzlich zum Werkzeug eine Tasteinrichtung angebracht, die die Feinjustierung des Werkzeuges in Bezug auf das Werkstück vornimmt. Dabei wird, ähnlich wie bei den nichtgetasteten Aggregaten, durch eine numerische Steuerung das Aggregat mit dem Werkzeug an das Werkstück angenähert. Die anschließende Feinjustierung, so dass die Kanten äußerst glatt werden, wird durch den Tastmechanismus durchgeführt. Dazu fährt ein Tastschuh oder eine andere Tasteinheit an das Werkstück heran, bis das Werkstück berührt bzw. die exakte Position erfasst wird. Da das Werkzeug somit mit der Tasteinrichtung genau ausgerichtet ist, kann die Bearbeitung am Werkstück sehr präzise durchgeführt werden. Solche Tastaggregate sind in elektronischer, mechanischer und optischer Form bekannt. Sie werden bislang dazu eingesetzt, eine Feinjustierung des Werkzeuges in Bezug auf das Werkstück in Richtung der Hauptspindel durchzuführen. Somit ist es insbesondere bekannt, die Kanten der Hauptflächen eines plattenförmigen Werkstückes getastet zu bearbeiten.

Unter "Hauptfläche" wird die Ober- bzw. die Unterseite verstanden, die im Wesentlichen parallel zueinander sind, unter dem Ausdruck "Stirnfläche" die dazu senkrecht stehenden Flächen. Der Übergang zwischen den Hauptflächen und der Stirnfläche wird als "Kante" bezeichnet. Als Kantenüberstand werden diejenigen Teile eines auf die Stirnfläche aufgeleimten oder in anderer Weise an dieser befestigten Elementes verstanden, die über die Stirnfläche in horizontaler Richtung vorstehen.

### DARSTELLUNG DER ERFINDUNG

Es ist eine Aufgabe der vorliegenden Erfindung, ein Bearbeitungsaggregat für ein Bearbeitungszentrum zur Bearbeitung von plattenförmigen Holzwerkstücken vorzusehen, mit Hilfe dessen die Stirnflächen eines plattenförmigen Werkstückes, selbst wenn sie mit Toleranzen behaftet sind, hochpräzise bearbeitet werden können.

Diese Aufgabe wird durch ein Bearbeitungsaggregat mit den Merkmalen des Anspruchs 1 gelöst.

Der Erfindung liegt der Gedanke zugrunde, das Einsetzen von Tasteinrichtungen auch auf die Bearbeitung der Stirnflächen eines Werkstückes anzuwenden. Insbesondere soll das erfindungsgemäße Bearbeitungsaggregat eine präzise Abtrennung von Kantenüberständen und/oder eine Eckbearbeitungen an plattenförmigen Werkstücken ermöglichen. Dadurch, dass eine Tasteinrichtung vorgesehen wird, ist es möglich, die Maßabweichungen, die durch den Fertigungsprozess, durch Abweichungen der Kantendicke oder Abweichungen in der Dicke des Leimauftrages entstehen auszugleichen, so dass eine präzise Abtrennung des Kantenüberstandes erfolgt. In ähnlicher Weise können, je nach eingesetztem Werkzeug, beispielsweise auch Fräsarbeiten an den Stirnflächen eines plattenförmigen Werkstückes hochpräzise durchgeführt werden, beispielsweise auch das Abrunden von Ecken. In diesem Fall ist es nötig, dass mindestens zwei Tasteinrichtungen, die die Tastrichtungen senkrecht zueinander aufweisen, vorgesehen werden.

Vorteilhafte Ausführungsformen sind durch die übrigen Ansprüche gekennzeichnet.

Bevorzugterweise ist die Tasteinrichtung eine mechanische, pneumatische, elektrische und/oder optische Tasteinrichtung oder eine Kombination der genannten Tasteinrichtungen. Es ist wünschenswert, je nach Art des zu behandelnden und zu bearbeitenden Werkstückes eine entsprechende Tasteinrichtung auszuwählen, um eine möglichst geringe Beschädigungsgefahr für die Werkstückoberfläche sicherzustellen. Insbesondere kann bei harten Werkstücken eine mechanische Einrichtung verwendet werden, die durch unmittelbare Berührung zwischen Tasteinrichtungen und Werkstück arbeitet. Bei empfindlichen Werkstoffen bietet es sich jedoch an, beispielsweise elektrisch oder optisch zu tasten, so dass die Tastung berührungslos ist. Mechanische Tasteinrichtungen sind dann vorzuziehen, wenn zuverlässige, kostengünstige Tasteinrichtungen ausgewählt werden sollen. Alle diese Tasteinrichtungen erzeugen Signale (elektrische Signale, oder bei mechanischen Tasteinrichtungen die Berührung zwischen Tasteinrichtung und Werkstück, usw.), die eine Justierbewegung der federnden Lagerung aufweisen.

Nach einer vorteilhaften Ausführungsform ist die Tasteinrichtung mindestens ein Tastzylinder mit Schiebehülse. Dies ist insbesondere bei empfindlichen Werkstücken eine gut geeignete Lösung, da in diesem Fall die Tastung ohne Schleifbewegung und stets anliegend am Werkstück erfolgt, so dass Beschädigungen des Werkstückes vermieden werden können.

Vorteilhafterweise ist das mit dem Bearbeitungsaggregat verwendete Werkzeug ein Kappsägeblatt, ein Fräskopf und/oder ein Eckenfräskopf. Kombinationen dieser Werkzeuge sind ebenfalls denkbar. Insbesondere sind Sägeblätter, wahlweise vertikal oder schrägstehend, und Fräsköpfe zur Bearbeitung der Stirnflächen eines plattenförmigen Werkstückes geeignet. Auch Eckfräsköpfe können dazu eingesetzt werden, um beispielsweise Ecken abzurunden. Je nach Ausführung des Bearbeitungsaggregates ist es möglich, gleichzeitig mehrere Werkzeuge um den Umfang des Aggregates verteilt anzubringen. Insbesondere kann auch eine Kombination verschiedener Werkzeuge oder zwei gleichartige Werkzeuge an unterschiedlichen Flächen des Bearbeitungsaggregates vorgesehen werden, wodurch eine kombinierte Bearbeitung, gegebenenfalls mit unterschiedlichen Werkzeugen, durchgeführt werden kann, ohne vorher einen Werkzeugwechsel durchführen zu müssen.

Nach einer besonders vorteilhaften Ausführungsform sind drei Werkzeuge vorgesehen, die im Wesentlichen U-förmig zueinander angeordnet sind. Insbesondere stehen die Werkzeuge jeweils paarweise zueinander senkrecht, wenn das Bearbeitungsaggregat in der Draufsicht betrachtet wird. In Achsrichtung ihrer Drehachse ist bevorzugterweise jeweils eine federnde Lagerung zwischen dem Anschlusselement und dem Werkzeughaltelement vorgesehen, so dass in zwei zueinander senkrechten Raumrichtungen getastet werden kann. Wenn zwischen zwei Kappsägeblättern als mittleres Werkzeug in der U-förmigen Konfiguration ein Eckenfräskopf eingesetzt wird, kann mit dem selben Bearbeitungsaggregat somit auch eine getastete Bearbeitung (in zwei Raumrichtungen getastet) der Ecke zum Abrunden vorgenommen werden. In diesem Fall können mit dem selben Aggregat ohne Werkzeugwechsel zunächst Kantenüberstände abgeschnitten werden und dann Ecken bearbeitet werden. Die Werkzeuge können dabei, zumindest teilweise, in der selben vertikalen Höhe angeordnet sein.

Selbstverständlich können auch beispielsweise zwei Werkzeuge an dem Bearbeitungsaggregat vorgesehen sein. Je nach Anforderungsprofil können zwei gleiche Werkzeuge, etwa Sägeblätter, oder zwei unterschiedliche Werkzeuge (Kombination aus Sägeblatt und Fräskopf) angebracht werden. Für jedes dieser Werkzeuge kann eine Tasteinrichtung vorgesehen werden. Alternativ dazu ist es selbstverständlich auch möglich, die Tastmöglichkeit auf eines oder bei Vorsehen von drei Werkzeugen, auf zwei Werkzeuge zu beschränken.

Bevorzugterweise sind die Tastanschläge der Tasteinrichtungen fest oder beweglich und in beiden Fällen einstellbar ausgeführt. Dies ist wiederum auswählbar, je nach Art der Bearbeitung und der Empfindlichkeit der Werkstücke.

Vorteilhafterweise wird die durch die Tasteinrichtung initiierte Verschiebebewegung zwischen Anschlusselement und Werkzeughalteelement getriebetechnisch dadurch ermöglicht, dass jeweils Zahnradkombinationen, die gegeneinander verschiebbar sind, vorgesehen werden, so dass zwischen diesen Zahnrädern einerseits eine Drehmomentübertragung und andererseits eine Relativbewegung zwischen Anschlusselement und Werkzeughalteelement möglich ist. Insbesondere ist dabei ein Zahnrad mit einer Geradverzahnung breiter als ein zweites mit diesem kämmendes Zahnrad, das ebenfalls eine Geradverzahnung aufweist, ausgeführt, so dass die beiden Zahnräder gegeneinander in Achsrichtung verschiebbar sind und damit die zum Ausgleich der Toleranzen notwendige Verschiebebewegung mitmachen können.

### KURZE BESCHREIBUNG DER ZEICHNUNGEN

Nachfolgend wird die Erfindung rein beispielhaft anhand der beigefügten Figuren beschrieben, in denen
- Fig. 1: einen Querschnitt durch das Bearbeitungsaggregat zeigt;
- Fig. 2: einen Querschnitt entlang der Linie A-A aus Fig. 1 zeigt;
- Fig. 3: eine perspektivische Ansicht eines erfindungsgemäßen Bearbeitungsaggregates zeigt;
- Fig. 4: eine Draufsicht auf das erfindungsgemäße Bearbeitungsaggregat beim Kappen zeigt; und
- Fig. 5: eine Draufsicht auf das erfindungsgemäße Bearbeitungsaggregat beim Eckenrunden zeigt.

### WEGE ZUR AUSFÜHRUNG DER ERFINDUNG

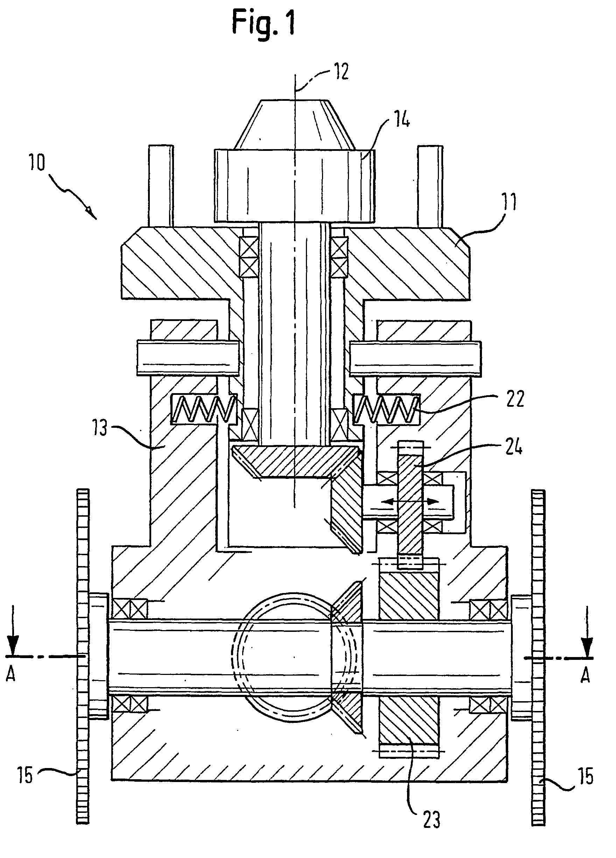

Fig. 1 zeigt ein erfindungsgemäßes Bearbeitungsaggregat 10 im Schnitt. Das erfindungsgemäße Bearbeitungsaggregat 10 umfasst ein Anschlusselement 11, das den Anschluss zu einer Spindel (nicht dargestellt) eines Bearbeitungszentrums herstellt. Die Spindelachse der nicht dargestellten Spindel ist mit Referenzziffer 12 angegeben. In dem Anschlusselement 11 ist ein Drehmoment übertragendes Element 14 untergebracht, das das von der Spindel aufgebrachte Drehmoment weiterleitet.

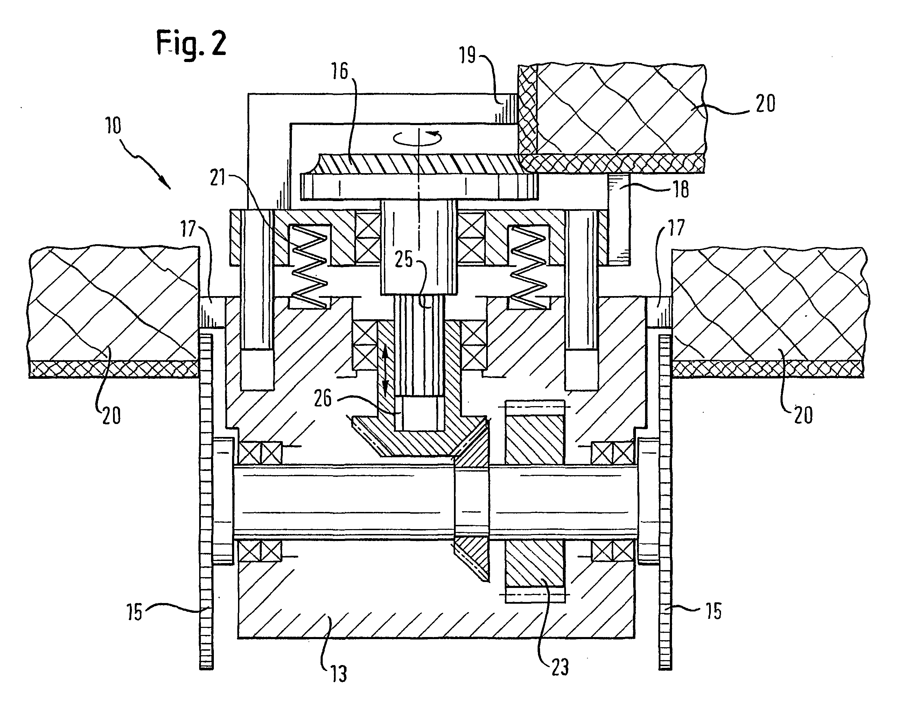

An dem Anschlusselement 11 ist ein Werkzeughalteelement 13 vorgesehen, das federnd an dem Anschlusselement 11 gelagert ist. In Fig. 1 ist insbesondere dargestellt, dass eine federnde Lagerung in einer Raumrichtung (rechts-links-Richtung in der Figur) vorgesehen ist. Aus Fig. 2, die einen Schnitt entlang der Linie A-A aus Fig. 1 darstellt, ist entnehmbar, dass bei dem Bearbeitungsaggregat in der dargestellten Ausführungsform auch entlang einer.zweiten, ebenfalls zur Spindelachse senkrechten Richtung, eine federnde Lagerung vorgesehen ist (hoch-tief-Richtung in Fig. 2).

An dem Werkzeughaltelement 13 sind die Werkzeuge, die in den Figuren mit Referenzziffern 15 und 16 bezeichnet sind, angebracht. Referenzziffer 15 bezeichnet Sägeblätter, von denen in der dargestellten Ausführungsform zwei vorgesehen sind, so dass sie symmetrisch zu einer Mittelachse des Bearbeitungsaggregates, also einander gegenüberliegend und nicht zueinander gewandt, angeordnet sind. Die Werkzeugsägeblätter erstrecken sich im Wesentlichen parallel zueinander. Es ist jedoch selbstverständlich auch möglich, die Werkzeugblätter 15 unter einem Winkel anzubringen. Wie aus Fig. 2 entnehmbar ist, ist ferner ein Fräskopf 16 zwischen den Sägeblättern 15 vorgesehen. Die Sägeblätter 15 und der Fräskopf, der als ein Eckenfräskopf ausgebildet ist, bilden also in der Draufsicht, die in Fig. 2 im Schnitt gezeigt ist, eine U-förmige Anordnung.

Für jedes der Werkzeuge 15, 16 ist ferner eine Tasteinrichtung am Bearbeitungsaggregat vorgesehen. Diese Tasteinrichtungen, die in der dargestellten Ausführungsform als Anschläge ausgeführt sind, sind so angebracht, dass die jeweiligen Werkzeuge mit ihren Bearbeitungskanten fluchtend mit den Anschlägen sind. Insbesondere ist aus Fig. 2 zu erkennen, dass für jedes der Sägeblätter 15 ein Stirnanschlag 17 vorgesehen ist. Für den Eckfräskopf sind zwei Anschläge 18, 19 vorgesehen, da in diesem Fall das Werkstück bezüglich zwei senkrecht zueinander stehenden Raumrichtungen ausgerichtet werden muss.

In Fig. 2 ist ferner an jedem der Werkzeuge 15, 15, 16 ein Werkstück, das zu bearbeiten ist, angedeutet dargestellt. Selbstverständlich ist normalerweise nur ein Werkstück in Bearbeitung. Diese Darstellung dient der Verdeutlichung, wie die Werkstücke normalerweise bei der Bearbeitung an den Anschlägen 17, 17, 18, 19 anliegen. Das Werkstück ist generell mit Referenzziffer 20 bezeichnet. Es ist insbesondere deutlich erkennbar, dass zum Sägen von Kantenüberständen, wie es mit den Kappsägeblättern 15 durchgeführt wird, jeweils ein Anschlag ausreichend ist. Dieser ist so positioniert, dass er genau fluchtend mit der Sägekante des Werkstücks zur Anlage kommt. Die federnde Lagerung des Werkstückhalteelementes 13 gleicht etwaige bestehende Toleranzen aus, so dass die genau fluchtende Bearbeitung mit Hilfe der Anschläge und damit der Tasteinrichtung durchgeführt werden kann.

Im Gegensatz dazu sind zur Eckenbearbeitung, wie sie mit dem Eckfräser 16 durchgeführt wird, zwei Anschläge nötig, an denen jeweils das Werkstück 20 anliegt. Auch hier werden die Toleranzen durch den in Fig. 2 dargestellten Federungsmechanismus, der für den Eckfräskopf mit Referenzziffer 21 bezeichnet ist, ausgeglichen.

Durch Kegelradübertragungsmechanismen bzw. Übertragungsmechanismen, die unterschiedlich lange Zahnräder verwenden, wird die Drehmomentübertragung zwischen der Spindel und dem Werkzeug 15, 16 sichergestellt. Insbesondere sind aus Fig. 1 die Übertragungsmechanismen für die Sägeblätter 15 zu erkennen. Es ist zu bemerken, dass die schwimmende, verschiebliche Lagerung ermöglicht wird, da die Übertragungsmechanismen in Form von zwei unterschiedlich langen Zahnrädern 23, 24 realisiert werden. Aufgrund der unterschiedlichen Flankenlänge können die Zahnräder in begrenztem Maß verschoben werden, wobei dennoch eine zuverlässige Drehmomentübertragung sichergestellt bleibt. Eines der Zahnräder 23 ist dabei auf der Welle für die Werkzeuge 15 gelagert, das andere ist im Anschlusselement gelagert. Die Umlenkung des Drehmomentes von der Spindelrichtung auf die Werkzeugachsrichtung erfolgt in bekannter Weise über Kegelräder.

Ein ähnlicher Mechanismus ist, wie aus der Draufsicht in Fig. 2 zu erkennen ist, für den Fräskopf 16 ebenfalls vorgesehen. Durch zwei zueinander verschieblich angeordnete Zahnflanken (eine Außenverzahnung 25 und eine Innenverzahnung 26) kann eine zuverlässige Drehmomentübertragung sichergestellt werden.

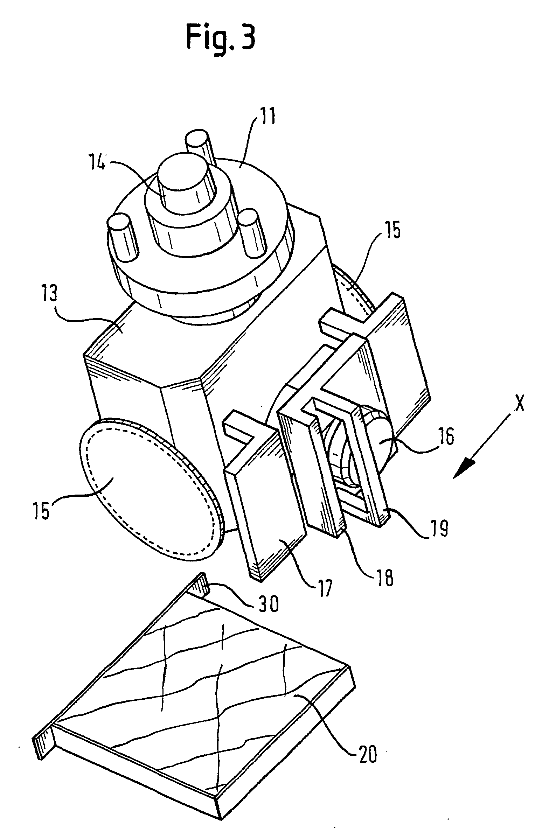

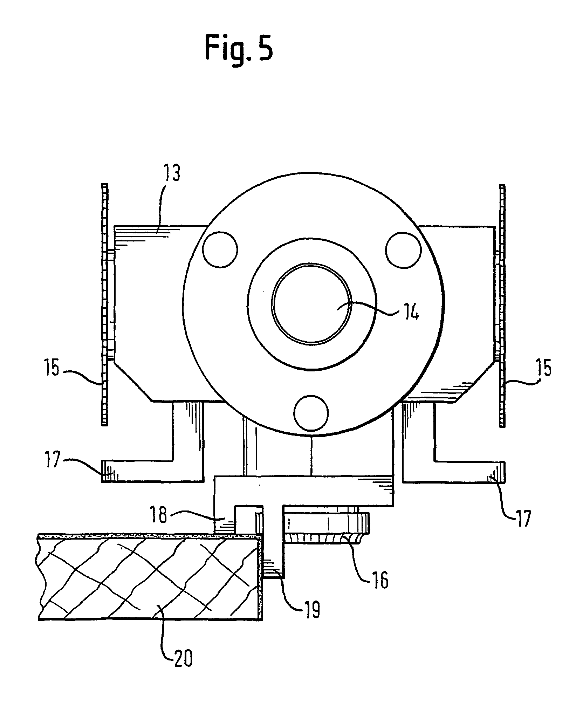

Anhand der Fig. 3 bis 5 wird im Folgenden kurz die Arbeitsweise des erfindungsgemäßen Bearbeitungsaggregates in der dargestellten Ausführungsform mit drei Werkzeugen beschrieben.

Ein Werkstück 20 weist an seinen Stirnflächen überstehende Kanten auf. Diese sollen durch das Bearbeitungsaggregat gekappt werden und anschließend die Ecken abgerundet werden.

Dazu wird das Aggregat zunächst mit Hilfe eines bekannten CNC-Positionierungsmechanismus an dem Werkstück positioniert, insbesondere indem es in Richtung X in Fig. 3 verfahren wird. Die Tasteinrichtung, die zu dem Sägeblatt 15 gehört, das dem Werkstück 20 zugewandt ist, soll dabei in Anlage mit der dem Bearbeitungsaggregat zugewandten Werkstückstirnfläche kommen. Insbesondere soll also die als Tastschuh dargestellte Tasteinrichtung 17 in Anschlag mit dem Werkstück 20 gelangen. Im nachfolgenden Bearbeitungsschritt soll einzig das Sägeblatt 15, das dem Werkstück 20 zugewandt ist, zum Einsatz kommen. Das zweite, zum ersten Sägeblatt gegenüberliegende Sägeblatt und der zwischen beiden Sägeblättern zu ihnen senkrecht liegende Fräskopf 16 werden im ersten Arbeitsschritt nicht benötigt.

Nach einer Vorpositionierung mittels des CNC-Mechanismus gelangt das Aggregat in den Zustand, in dem gefederte Tastung verwendet wird. Die Tasteinrichtung 17 liegt dabei an der Werkstückkante an. Während des nachfolgenden Kappvorgangs für die Kante, die in Fig. 3 mit Referenzziffer 30 bezeichnet ist, liegt die Tasteinrichtung 17 kontinuierlich am Werkstück an und das Bearbeitungsaggregat fährt unter Ausführung der Schneidbewegung nach unten.

Nach dem Kappen wird das Aggregat wieder in eine Ausgangsposition durch eine Bewegung nach oben gebracht. Es fährt anschließend vom Werkstück weg.

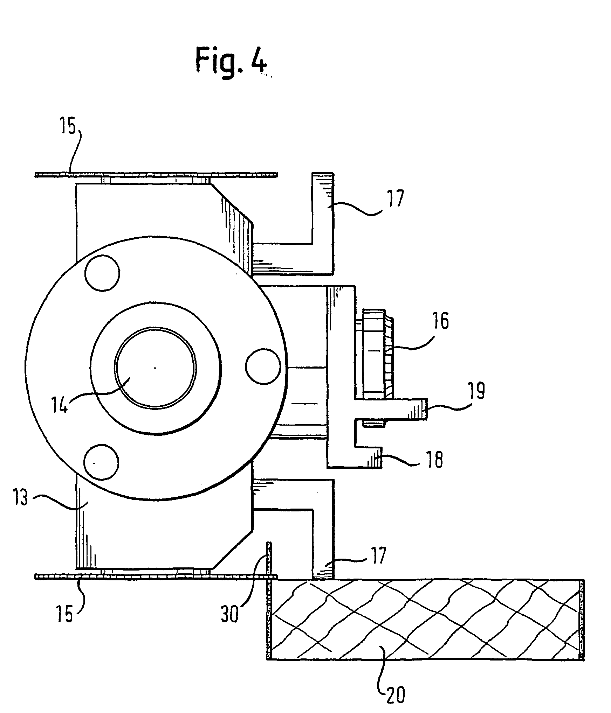

Die Position, die Werkstück, Tasteinrichtung 17 und Kappsägeblatt 15 während des Schneidvorgangs zum Kappen der überstehenden Kante 30 einnehmen, ist in Fig. 4 durch eine Draufsicht auf das Bearbeitungsaggregat nochmals veranschaulicht. Es ist deutlich zu erkennen, dass die Tastfläche des Tastschuhs 17 an der Werkstückstirnfläche anliegt und fluchtend mit der Schneidkante des Sägeblattes 15 ist.

In ähnlicher Weise werden zunächst alle überstehenden Kanten des Werkstücks 20 gekappt, wobei je nach Lage eines der beiden Sägeblätter 15 zum Einsatz kommt.

Soll anschließend eine Abrundung der Ecken durchgeführt werden, so ist dies mit dem gleichen Bearbeitungsaggregat 10 möglich. Dazu wird das Bearbeitungsaggregat durch eine CNC-Steuerung zunächst in eine Position gebracht, so dass es in der Nähe der Bearbeitungsposition ist. Anschließend werden die zwei Tastschuhe 18, 19, die zum getasteten Eckenfräsen vorgesehen sind, in Anlage mit zwei Stirnflächen des Werkstücks 20 gebracht. Die Tastflächen der Tastschuhe 18, 19 sind wiederum so ausgerichtet, dass in der anliegenden Position, in der das Bearbeitungsaggregat anschließend getastet nach unten fährt, eine präzise Eckbearbeitung durchgeführt werden kann, da der Eckfräskopf 16 stets durch die Tasteinrichtungen 18, 19 ausgerichtet ist. Während der Abwärtsbewegung wird die Eckbearbeitung kontinuierlich durchgeführt.

Nach Vervollständigung dieser Bearbeitung fährt das Aggregat nach einer Fahrt senkrecht nach oben wieder vom Werkstück weg und eine weitere Bearbeitung kann durchgeführt werden.

Somit ist es mit dem dargestellten Bearbeitungsaggregat möglich, sowohl die Kappbearbeitung als auch das Abrunden der Ecken mit einem einzigen Bearbeitungsaggregat durchzuführen. Beide Bearbeitungen werden jeweils tastend gemacht, so dass hochpräzise Holzbearbeitungen von plattenartigen Bauteilen möglich sind.

In der dargestellten Ausführungsform sind Tastschuhe, also eine mechanische Tastung für sowohl die Kappbearbeitung als auch das Eckenfräsen verwendet. Alternativ dazu ist es selbstverständlich möglich, eine oder beide der Tastungen auf eine andere Weise, etwa optisch, elektronisch oder pneumatisch durchzuführen. Auch sind in der dargestellten Ausführungsform zwei Sägeblätter zum Kappsägen und ein Fräskopf in einer U-förmigen Konfiguration in der Draufsicht vorgesehen. Selbstverständlich ist es auch möglich, die Werkzeuge unter anderen Winkeln anzuordnen bzw. andere Werkzeuge oder ggf. nur ein oder zwei Werkzeuge zu verwenden.

Der wesentliche Aspekt der Erfindung liegt darin, dass mit Toleranzen behaftete plattenförmige Holzwerkstücke in Bearbeitungszentren an ihren Stirnflächen bearbeitet werden können und Toleranzen dabei ausgeglichen werden können.

## Patentansprüche

1. Bearbeitungsaggregat (10) für ein Bearbeitungszentrum zur Bearbeitung einer Stirnfläche eines plattenförmigen Holzwerkstücks (20) mit zwei Hauptflächen und mindestens einer Stirnfläche, umfassend
- ein Anschlusselement (11) zu einer Spindel des Bearbeitungszentrums;
- ein Werkzeughalteelement (13), das mit dem Anschlusselement (11) über mindestens eine federnde (21, 22) Lagerung verbunden ist, die eine Verschiebebewegung des Werkzeughalteelements (13) in Bezug auf das Anschlusselement (11) senkrecht zur Spindelachse (12) zulässt;
- mindestens eine Tasteinrichtung (17, 18, 19), die an dem Werkzeughalteelement (13) angebracht ist und die Signale zur Verschiebung des Werkzeughalteelements (13) in Bezug auf das Anschlusselement (11) erzeugt; und
- mindestens ein Werkzeug (15, 16) zur Bearbeitung der mindestens einen Stirnfläche des plattenförmigen Werkstücks (20);
**dadurch gekennzeichnet, dass**
das Werkzeug (15, 16) an dem Werkzeughalteelement (13) so angebracht ist, dass die Verschiebebewegung parallel zur Drehachse des Werkzeugs verläuft.

2. Bearbeitungsaggregat (10) nach Anspruch 1, **dadurch gekennzeichnet, dass** die Tasteinrichtung eine mechanische, pneumatische, elektrische und/oder optische Tasteinrichtung ist.

3. Bearbeitungsaggregat (10) nach Anspruch 1, **dadurch gekennzeichnet, dass** die Tasteinrichtung mindestens ein Tastzylinder mit Schiebehülse ist.

4. Bearbeitungsaggregat (10) nach einem der vorhergehenden Ansprüche, **dadurch gekennzeichnet, dass** das mindestens eine Werkzeug ein Kappsägeblatt, ein Fräskopf und/oder ein Eckenfräskopf ist.

5. Bearbeitungsaggregat (10) nach einem der vorhergehenden Ansprüche, **dadurch gekennzeichnet, dass** drei Werkzeuge (erstes bis drittes Werkzeug) vorgesehen sind, die u-förmig zueinander angeordnet sind.

6. Bearbeitungsaggregat (10) nach Anspruch 5, **dadurch gekennzeichnet, dass** zwei Kappsägeblätter (15) und ein Eckfräskopf (16) als Werkzeuge vorgesehen sind.

7. Bearbeitungsaggregat (10) nach Anspruch 5 oder 6, **dadurch gekennzeichnet, dass** in der Achsrichtung der Drehachsen der Werkzeuge jeweils eine federnde Lagerung vorgesehen ist.

8. Bearbeitungsaggregat (10) nach einem der Ansprüche 5 bis 7, **dadurch gekennzeichnet, dass** die Drehachse des zweiten Werkzeuges senkrecht zur Drehachse des ersten und dritten Werkzeuges ist.

9. Bearbeitungsaggregat (10) nach einem der Ansprüche 5 bis 8, **dadurch gekennzeichnet, dass** das erste und dritte Werkzeug einander gegenüber liegen und in Bearbeitungsposition auf der gleichen vertikalen Höhe liegen.

10. Bearbeitungsaggregat (10) nach einem der vorhergehenden Ansprüche, **dadurch gekennzeichnet, dass** die mindestens eine Tasteinrichtung (17, 18, 19) einen festen und/oder beweglichen Tastanschlag umfasst.

11. Bearbeitungsaggregat (10) nach einem der vorhergehenden Ansprüche, **dadurch gekennzeichnet, dass** zur Drehmomentübertragung zwischen Anschlusselement und Werkzeughalteelement Zahnradkombinationen (23, 24, 25, 26) vorgesehen sind.

## Claims

1. Machining unit (10) for a machining centre for machining an end face of a board-shaped wooden workpiece (20) with two main faces and at least one end face, comprising
- a connecting element (11) to a spindle of the machining centre,
- a tool-holding element (13), connected to the connecting element (11) via at least one spring (21, 22) bearing, which allows a displacement movement of the tool-holding element (13) perpendicular to the spindle axis (12) in relation to the connecting element,
- at least one touch-device (17, 18, 19) which is attached to the tool-holding element (13) and generates the signals for displacing the tool-holding element (13) in relation to the connecting element (11) and
- at least one tool (15, 16) for machining the at least one end face of the board-shaped workpiece (20),
**characterised in that** the tool (15, 16) is attached to the tool-holding element (13) in such a way that the displacement movement runs parallel to the axis of rotation of the tool.

2. Machining unit (10) according to claim 1, **characterised in that** the touch-device is a mechanical, pneumatic, electric and/or optical touch-device.

3. Machining unit (10) according to claim 1, **characterised in that** the touch-device is at least a touch-cylinder with a sliding sleeve.

4. Machining unit (10) according to one of the preceding claims, **characterised in that** the at least one tool is a circular saw blade, a milling head and/or a corner milling head.

5. Machining unit (10) according to one of the preceding claims, **characterised in that** three tools (first to third tool) are provided, arranged in a U-shape in respect of one another.

6. Machining unit (10) according to claim 5, **characterised in that** two circular saw blades (15) and one corner milling head (16) are provided as tools.

7. Machining unit (10) according to claim 5 or 6, **characterised in that** in the axial direction of the axes of rotation of the tools a spring bearing is provided in each case.

8. Machining unit (10) according to one of claims 5 to 7, **characterised in that** the axis of rotation of the second tool is perpendicular to the axis of rotation of the first and third tools.

9. Machining unit (10) according to one of claims 5 to 8, **characterised in that** the first and third tools are opposite one another and in the machining position lie at the same vertical height.

10. Machining unit (10) according to one of the preceding claims, **characterised in that** the at least one touch-device (17, 18, 19) comprises a fixed and/or a movable touch-stop.

11. Machining unit (10) according to one of the preceding claims, **characterised in that** toothed wheel combinations (23, 24, 25, 26) are provided for torque transmission between the connecting element and the tool-holding element.

## Revendications

1. Unité d'usinage (10) destinée à un centre d'usinage, pour l'usinage d'une face frontale d'une pièce d'ouvrage (20) en bois se présentant sous forme de plaque, avec deux faces principales et au moins une face frontale, comprenant :
- un élément de raccordement (11) à une broche du centre d'usinage ;
- un élément de maintien d'outil (13), relié à l'élément de raccordement (11) par l'intermédiaire d'au moins un montage en palier (21, 22) élastique, qui permet un déplacement de coulissement de l'élément de maintien d'outil (13) par rapport à l'élément de raccordement (11), perpendiculairement par rapport à l'axe de broche (12) ;
- au moins un dispositif de palpage (17, 18, 19), monté sur l'élément de maintien d'outil (13) et générant des signaux pour le déplacement de l'élément de maintien d'outil (13) par rapport à l'élément de raccordement (11) ; et
- au moins un outil (15, 16) pour l'usinage de la au moins une face frontale de la pièce d'ouvrage (20) se présentant sous forme de plaque ;
**caractérisée en ce que**
l'outil (15, 16) est monté sur l'élément de maintien d'outil (13), de manière que le déplacement coulissant se fasse parallèlement à l'axe de rotation de l'outil.

2. Unité d'usinage (10) selon la revendication 1, **caractérisée en ce que** le dispositif de palpage est un dispositif de palpage mécanique, pneumatique, électrique et/ou optique.

3. Unité d'usinage (10) selon la revendication 1, **caractérisée en ce que** le dispositif de palpage est au moins un cylindre de palpage muni d'une douille coulissante.

4. Unité d'usinage (10) selon l'une des revendications précédentes, **caractérisée en ce que** le au moins un outil est une lame de scie à coupe oscillatoire, une tête de fraisage et/ou une tête de fraisage d'angle.

5. Unité d'usinage (10) selon l'une des revendications précédentes, **caractérisée en ce que** trois outils (un premier à un troisième outil) sont prévus, disposés les uns par rapport aux autres en forme de u.

6. Unité d'usinage (10) selon la revendication 5, **caractérisée en ce que** deux lames de scie à coupe oscillatoire (15) et une tête de fraisage d'angle (16) sont prévues en tant qu'outils.

7. Unité d'usinage (10) selon la revendication 5 ou 6, **caractérisée en ce qu'**un montage en palier élastique est prévu respectivement dans chacune des directions axiales des axes de rotation des outils.

8. Unité d'usinage (10) selon l'une des revendications 5 à 7, **caractérisée en ce que** l'axe de rotation du deuxième outil est perpendiculaire à l'axe de rotation du premier et du troisième outil.

9. Unité d'usinage (10) selon l'une des revendications 5 à 8, **caractérisée en ce que** le premier et le troisième outil sont placés à l'opposé l'un de l'autre et à la même hauteur verticale, une fois en position d'usinage.

10. Unité d'usinage (10) selon l'une des revendications précédentes, **caractérisée en ce que** le au moins un dispositif de palpage (17, 18, 19) comprend une butée de palpage fixe et/ou une autre mobile.

11. Unité d'usinage (10) selon l'une des revendications précédentes, **caractérisée en ce que** des combinaisons de roue dentée (23, 24, 25, 26) sont prévues, pour assurer le transfert d'un couple de rotation entre l'élément de raccordement et l'élément de maintien d'outil.
